# EUROPEAN PATENT APPLICATION

(11) **EP 4 552 966 A1**
(43) Date of publication of application: **14.05.2025**
(21) Application number: 23315416.0
(22) Date of filing: 10.11.2023
(51) Int. Cl.: B63B 3/18, B63B 35/44

(54) **OFFSHORE WIND TURBINE PLATFORM**

(71) Applicant: TotalEnergies OneTech, 92400 Courbevoie (FR)
(72) Inventor: AUBERT, Jean-Michel, 92400 COURBEVOIE (FR); RABOIN, Jean-Christophe, 92400 COURBEVOIE (FR)
(74) Representative: Innovincia

(57) **Abstract**

The invention relates to an offshore wind turbine platform (1) comprising:
- a main body (4) intended to receive a mast of a wind turbine attached to it,
- several floats (2), each float comprising an upper metal wall (2') forming an upper end of the float, a lower metal wall (2") forming a lower end of the float, and several side walls (18, 28, 28', 48, 58) connecting the upper and lower metal walls to create a watertight enclosure of the float,
- several metal connection structures (6), each metal connection structures comprising at least a first end (8) attached to one float and a second end (10) attached to the main body.

## Description

The invention relates to offshore wind turbine platforms, and more particularly to an offshore platform comprising floats.

It is known in the context of offshore wind turbine installations to place a wind turbine on a floating platform. To do so, the platform is equipped with multiple floats to keep it above the water, in addition to anchoring elements securing the platform to the seabed.

Floating wind turbine platforms are generally made of steel, such as carbon steel, or even reinforced concrete. Regarding reinforced concrete platforms, they exhibit good mechanical performance and resistance to corrosion but result in significant increases in the platform's mass and therefore the dimensions of its anchorages.

Steel platforms are traditionally constructed with steel plates attached to each other, for example by welding them together, and reinforced by steel reinforcements welded to the steel plates, which act as stiffeners to maintain the structural integrity and counteract the effects of waves. To enable buoyancy, at least one plate assembly forms an airtight internal volume.

The above-described architecture for steel platforms leads to increased manufacturing costs due to the welding of reinforcements to the steel plates, as well as the need to apply an anti-corrosion coating to all surfaces susceptible to corrosion, which represents a significant surface area when considering the welded reinforcements. Moreover, considering the large number of visible welds exposed to corrosion and the relief created by the reinforcements, significant and costly monitoring and maintenance of the platform are required.

Furthermore, platforms, especially the floats, are designed using metal plates, which narrows the supply chain down to a single source of metal. This can become problematic if tensions arise in the supply chain.

Finally, the use of a significant amount of metal for the production of large platforms increases the environmental cost of platform manufacturing. For instance, in the case of steel plate production, producing one ton of steel emits approximately 2.4 tons of carbon dioxide.

The invention aims to provide an offshore wind turbine platform that reduces manufacturing and maintenance costs while maintaining good mechanical performance, in reducing the amount of metal used to manufacture the platform and allowing to use several metal supply chains.

To this end, the invention relates to an offshore wind turbine platform comprising:
- a main body intended to receive a mast of a wind turbine attached to it,
- several floats, each float comprising an upper metal wall forming an upper end of the float, a lower metal wall forming a lower end of the float, and several side walls connecting the upper and lower metal walls to create a watertight enclosure of the float, each side wall comprising an external metal panel, an internal metal panel parallel to the external panel at least one corrugated metal sheet extending in a space between the external metal panel and the internal metal panel, the corrugated metal sheet being attached to both internal metal panel and external metal panel,
- several metal connection structures, each metal connection structures comprising at least a first end attached to one float and a second end attached to the main body.

Thus, a lighter platform is obtained compared to prior art structures because it is devoid of reinforcements, at least at the level of the side walls, while maintaining optimal mechanical properties due to the structure of the side walls. The structure of the floats allows to manufacture smaller floats with same performances that the ones of the prior art reducing the amount of metal used and consequently the environmental cost of platform manufacturing.

Furthermore, the absence of reinforcements reduces the surface area requiring an anti-corrosion coating, resulting in cost savings in production. This absence also allows a reduction in the external dimensions of the float, resulting in improved resistance to waves and ocean currents.

The attachment points between the panels and the corrugated sheet are not exposed to external marine conditions, reducing float maintenance costs.

Finally, the structure of the floats allows to use metal in coils, particularly steel coils, thus diversifying metal supply chains.

The offshore wind turbine platform can comprise at least one of the following features:
- the offshore wind turbine float comprise multiple flat side walls attached to each other to form the side wall, and attached to the upper and lower metal walls,
- at least one flat side wall forms a closed and airtight volume relative to the other flat side walls,
- at least one flat side wall comprises at least one connecting end to a second wall formed solely by the external metal panel and including a fold,
- at least one side wall is a connection wall to which a first end of the metal connection structure is attached, the connection wall being formed by a plurality of metal plates attached together and each comprising at least one through-hole for the first end of the metal connection structure, the through-holes of the metal plates being aligned, at least one metal plate comprising a projection extending from the through-hole perpendicularly to the metal plate from its surface,
- the connection wall is attached to other side walls via a transition piece intended to transfer forces between them,
- the transition piece comprises a first part on which the connection wall is attached, at least one second part to which a side wall comprising an external metal panel, an internal metal panel parallel and at least one corrugated metal sheet is attached, and a third part linking the first and second parts together,
- the transition piece is a rolled piece,
- the width of the lower metal wall is larger than the width of the remaining float,
- the corrugated metal sheet is glued to at least one of the internal and external metal panel,
- the corrugated metal sheet is welded to at least one of the internal and external metal panels by resistance welding,
- the upper metal wall and/or the lower metal wall comprise at least one stiffener,
- the upper metal wall and/or the lower metal wall comprise:
   - an external metal panel,
   - an internal metal panel parallel to the external panel,
   - at least one corrugated metal sheet extending within a space formed
   - between the external metal panel and the internal metal panel, wherein the corrugated metal sheet is attached to both the internal metal panel and the external metal panel,
- the side wall comprises several superimposed corrugated metal sheets,
- the amplitude and period of the corrugations are different from one corrugated metal sheet to another, a flat metal sheet being preferably arranged between two consecutive corrugated sheets,
- at least one wall of the float comprises at least one pressurizing device of the enclosure of the float,
- the pressurizing device is configured to maintain a constant overpressure in the enclosure of the float,
- at least one part of the corrugated metal sheet is dimensioned and attached to the internal metal panel and/or the external metal panel to form at least one sealed compartment between the corrugated metal sheet and the internal metal panel and/or the external metal panel,
- the internal and external metal panels are smooth,
- at least one metal connection structure is formed by metal tubes forming the first and second ends of the metal connection structure and metal crossbeams linking the metal tubes together,
- at least one part of at least one metal connection structure is a pressurized hollow body,
- a pressurizing device is configured to maintain a constant overpressure in the hollow body.

### Brief description of figures

The invention will be better understood by reading the following description, given solely as an example and referring to the accompanying drawings in which:
Figure 1 is a view of a platform according to the invention,
Figure 2 is a view of a float of a platform according to the invention,
Figure 3 is a cross-sectional view of a float portion of a platform according to the invention,
Figure 4 is an exploded view of a connection wall according to the invention,
Figure 5 is an assembled view of a connection wall according to the invention,
Figure 6 is an exploded view of a side wall of a float according to a first variant of a first embodiment of the invention,
Figure 7 is an assembled view of a side wall of a float according to the first variant of the first embodiment of the invention,
Figure 8 is a view of the side walls of a float according to the first variant of the first embodiment of the invention,
Figure 9 is an assembled view of a side wall of a section of the mast according to a second variant of the first embodiment of the invention,
Figure 10 is an assembled view of a side wall of a float according to a third variant of the first embodiment of the invention,
Figure 11 is a view of the side walls of a float according to the third variant of the first embodiment of the invention,
Figure 12 is an assembled view of a side wall of a section of the mast according to a fourth variant of the first embodiment of the invention, or
Figure 13 is a cross-sectional view of a part of a float according to a second embodiment of the invention.

### Detailed description

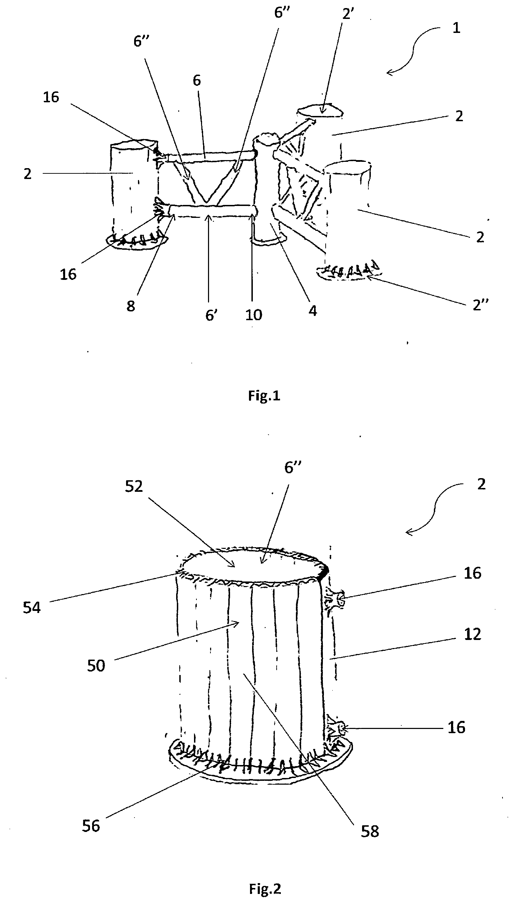

We are now referring to figure 1 illustrating an offshore wind turbine platform 1 comprising:
- A main body 4 intended to receive a mast of a wind turbine attached to it.
- Several floats 2, each float comprising an upper metal wall forming an upper end of the float, a lower metal wall forming a lower end of the float, and several side walls connecting the upper and lower metal walls to create a watertight enclosure of the float, each side wall comprising an external metal panel, an internal metal panel parallel to the external panel at least one corrugated metal sheet extending in a space between the external metal panel and the internal metal panel, the corrugated metal sheet being attached to both internal metal panel and external metal panel. At least one ballast can be placed in at least one float to balance the platform.
- Several metal connection structures 6 (three on figure 1), each metal connection structures comprising at least a first end 8 attached to one float and a second end 10 attached to the main body.

The upper metal wall, the lower metal wall, the external metal panel, the internal metal panel, and the corrugated metal sheet are preferably made of steel, more preferably of stainless steel or a steel grade suitable for stamping, such as those used for manufacturing structural parts of the body of cars or industrial transport vehicles. Preferably, the internal and external metal panels and are smooth, in order to reduce the amount of anti-corrosion coating to use in order to protect each float 2.

Preferably, the width of the lower metal wall (see the lower metal wall 60 on figure 2) is larger than the width of the remaining float 2. This configuration provides float 2 with a stable footing for vertical water movements.

The corrugated metal sheet can extend or not on the whole height of the side wall. This is the case for all the embodiments of the invention.

The attachment method of the corrugated metal sheet to the external metal panel and to the internal metal sheet is preferably chosen among welding and gluing (exclusive or combined methods). A gluing method reduces manufacturing times compared to welding, while at the same time enabling good force transfer by providing an adhesive sufficiently elastic. For this purpose, an adhesive based on an acrylic or methacrylic acid ester polymer such as, for example, polymethyl or ethyl methacrylate, or methyl or ethyl polyacrylate can be an acceptable adhesive for joining steel parts of any grade. The metal parts are preferably degreased and dusted off before gluing. A simple checking step for the absence of greasy products can also be performed. Gluing avoids metal alteration that may occur when welding results in thermal modification of steel morphology, composition and properties. In case of welding, the corrugated metal sheet can be welded to at least one of the internal and external metal panels and by resistance welding. This method is preferred for its speed of execution (largely robotized), its mechanical quality and its cost effectivity.

The upper metal wall and/or the lower metal wall can comprise at least one stiffener.

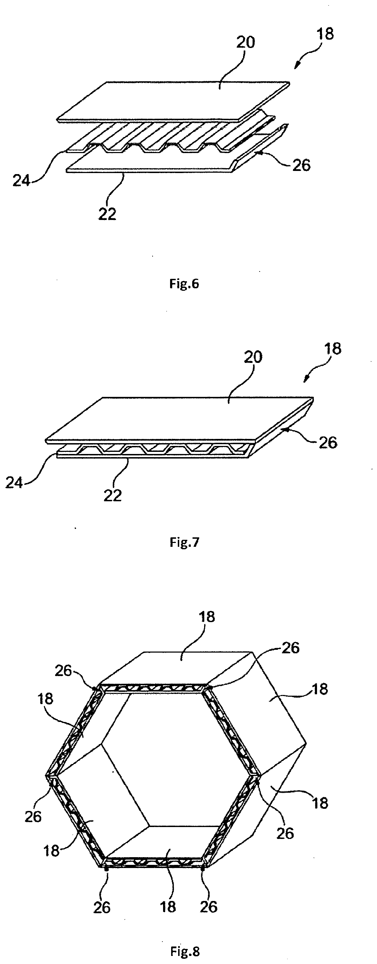

Preferably, at least one lateral face of the side wall (i.e., the free ends of the side wall) is closed by a junction between the external metal wall and the internal metal wall, as shown on figure 7 on which an external metal panel end 26 is folded to be attached, for example by welding, to the internal metal panel 20. Alternatively to a direct attachment between the external metal panel and the internal metal panel, a third part can be provided to ensure the link between these two panels. For example, the upper metal wall and the lower metal wall allow to close the gap between the external metal panel and the internal metal panel when the float is assembled. Preferably, all the lateral faces of the side wall are closed thanks to at least one of the alternatives described above in order to form the side wall as a sealed space. Thanks to this possibility, and in case of a float made with several side walls, some water can come into a side wall, for example after the appearance of a breach in the latter, without coming into other side walls.

Preferably, at least one part of the corrugated metal sheet is dimensioned and attached to the internal metal panel and/or the external metal panel to form at least one sealed compartment between the corrugated metal sheet and the internal metal panel and/or the external metal panel. Thanks to this possibility, some water can come into a side wall in a sub-volume formed by the corrugated metal sheet and the external and/or internal metal panels and, for example after the appearance of a breach in the latter, without coming into other parts of the side wall.

As shown on figure 1, at least one metal connection structure 6 is formed by metal tubes 6', for example steel tubes, forming the first and second ends 8 and 10 of the metal connection structure and metal crossbeams 6", for example steel crossbeams, linking the metal tubes 6' together. The first and second ends 8 and 10 are attached to the floats 2 and to the main body 4, for example by welding or other suitable attachment methods. The metal crossbeams 6" allow to reinforce the metal connection structures 6.

At least one of the metal tubes 6' and/or the metal crossbeams is a pressurized hollow body. In such a case, the pressurized volume (at least one part of the metal connection structure 6) is a closed sealed volume. A pressurized device allows to create an overpressure inside the closed and sealed volume. Pressurization allows, when combined with a pressure-measuring device, to check for any leaks that might occur as a result of welding defects or corrosion. It also makes it possible to use thinner sheet of metal without any loss of mechanical resistance of the metal connection structure 6. The latter can be pressurized with air, preferably dry air, at a pressure adapted to the conditions of use, typically between 0.1 and 2 bar, relative to atmospheric pressure.

Figure 2 illustrates the side walls of a float according to the invention.

In this example, a metal coil sheet, 1,8 meter wide and 3 millimeters thick, is unwound and bent to produce a corrugated metal sheet 54, 1,8 meter wide and 14 meters long, with longitudinal corrugations. The corrugations have a period of 200 millimeters and an amplitude of 180 millimeters. The corrugated metal sheet 54 is laid flat and adjusted to cover the entire surface of a first horizontally laid metal sheet, 2 meters wide, 14 meters long and 10 millimeters thick, with a longitudinal fold of 82.5° located at 202 millimeters from its edge. The contact areas between the first steel sheet and the corrugated metal sheet 54 are welded together. The first metal sheet forms the external metal panel 50.

A bead of acrylic adhesive is applied to the upper free part of each corrugation. A second steel sheet, 1,85 meter wide, 14 meters long and 10 millimeters thick, is bent longitudinally at a 15° angle 2,6 cm from the edge. The second metal sheet forms the internal metal panel 52. This second metal sheet is laid on top of the first metal sheet, topped by the corrugated metal sheet 54, by applying the 14 meters free edge of the 202 millimeters by 14 meters plane of the first metal sheet to the fold of the second 1,85 meter metal sheet, and the assembly is kept compressed to bring the acrylic adhesive into contact with the second sheet and allow it to set. The free edge of the first metal sheet is welded over the entire fold in contact with the second metal sheet.

Twenty-four side walls obtained as above are laid vertically with their 14 meters edge perpendicular to the plane of a 22 millimeters-thick, 15 meters-diameter steel floor (i.e., the lower metal wall 60) with internal stiffeners (not shown). The side walls 58 are centered on the lower metal wall 60 to form a regular polygon with a 15° angle between each side wall 58. The side walls 58 are welded edge-to-edge and to the lower metal wall 60. The lower metal wall 60 includes pre-welded stiffeners 56 designed to accommodate the side walls 58, which are embedded in them. The side walls 58 are welded to the pre-welded stiffeners 56. The inner part of the pre-welded stiffeners 56, which fits into the side walls 58, is coated with acrylic glue before each side wall 58 is installed.

Finally, an 18 millimeters-thick polygonal steel roof with stiffeners, forming the upper metal wall (not shown) is fitted, installed and welded to the assembly to form a polygonal float with offset flat welds.

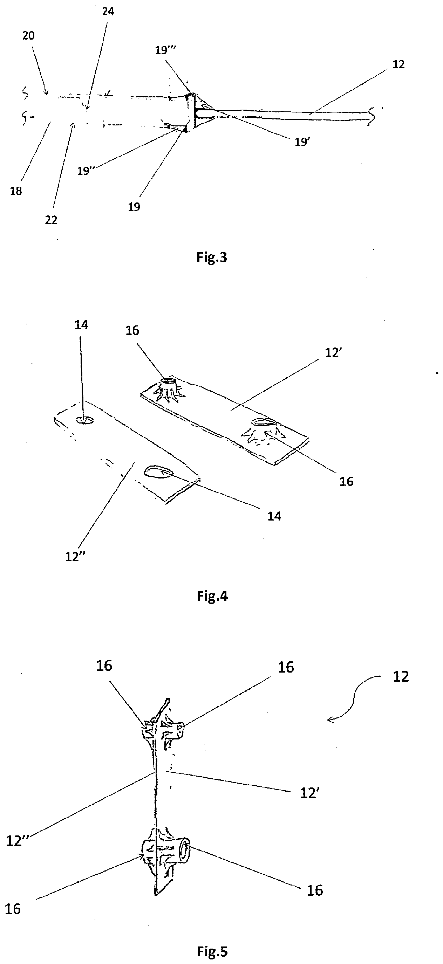

As shown on figures 2 to 5, at least one side wall is a connection wall 12 to which a first 8 end of the metal connection structure 6 is attached, the connection wall 12 being formed by a plurality of metal plates (two metal plates 12' and 12" in this example), for example steel plates, attached together and each comprising at least one through-hole 14 for the first end 8 of the metal connection structure 6, the through-holes 14 of the metal plates 12' and 12" being aligned, at least one metal plate (the two metal plates 12' and 12" in the example on figure 5) comprising a projection 16 extending from the through-hole 14 perpendicularly to the metal plate 12" from its surface. The projection 16 allows to stabilize a first end 8 attached to a float 2. Projections 16 can extend outside the float 2, inside the float 2 or in both directions.

As shown on figure 3, the connection wall 12 can be attached to other side walls (a side wall 18 in this example) via a transition piece 19 intended to transfer forces between the connection wall 12 and adjacent side walls. The connection wall 12 can have a thickness comprised between 22 and 50 millimeters, the side wall 18 can have dimensions as described in the different embodiments of the invention.

The transition piece 19 can comprise a first part 19' (with a length, for example, of 80 millimeters) on which the connection wall 12 is attached, at least one second part 19" (with a length, for example, of 80 millimeters) to which a side wall 18 comprising an external metal panel 20, an internal metal panel 22 parallel and at least one corrugated metal sheet 24 is attached, and a third part 19‴ (with a thickness, for example, of 22 millimeters) linking the first and second parts 19' and 19‴ together. The second part 19" can be inclined form the third part 19‴ to the side wall 8, the inclination can be 1/4 gradient. The first part 19' can be inclined form the third part 19‴ to the connection wall 12, the inclination can be 1/2 gradient.

The transition piece can be a rolled piece forming a one-part element. It can alternatively be formed by different parts attached to one another, for example welded together.

We describe now different embodiments and different variants of floats used for the invention.

Figures 6 and 7 illustrate a side wall 18 according to a first variant of a first embodiment of the invention. This side wall 18 is flat and constituted by an external metal panel 20, an internal metal panel 22 and a corrugated metal sheet 24. The corrugated metal sheet 24 is attached to the external and internal metal panels 20 and 22 thanks to an attachment medium described above.

In this variant, one end 26 of the internal metal wall 22 is, as explained above, folded in order to be attached to the external metal panel 20 and to close one lateral face of the side wall 18. The folding angle can be comprised between 60° and 85°. The three other lateral faces of the side wall 18 are open. The number of faces closed by a folded end of the internal or external metal panels 20 or 22 can be superior to one lateral face, for example with two ends folded, using the same panel or the two panels with one folded end by panel.

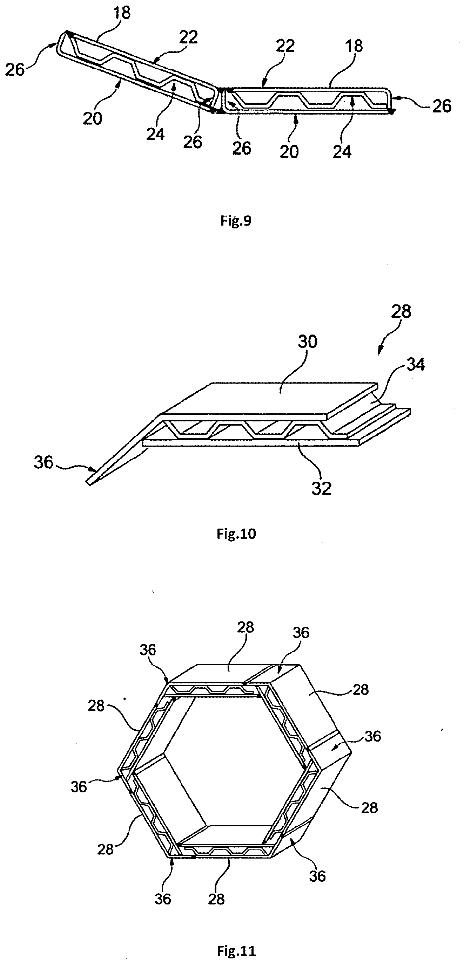

As shown on figure 8, the float 2 is formed by six side walls 18 (the number of side walls 18 can be different) welded together. One open lateral wall is closed by the junction between two side walls 18 (thanks to the folded end of another side wall 18), the other open lateral faces are closed by welding the upper and lower metal walls (circular or not). In this configuration, each side wall 18 forms a closed and airtight volume relative to the other flat side walls 18. Figure 9 illustrates a second variant of the second embodiment of a side wall 18 according to the invention in which the internal metal panel 22 and the external metal panel 20 have both a folded end 26 in order to close two lateral faces of the side wall 18.

Figure 10 illustrates a side wall 28 according to a third variant of a first embodiment of the invention. This side wall 28 is flat and constituted by an external metal panel 30, an internal metal panel 32 and a corrugated metal sheet 34. The corrugated metal sheet 34 is attached to the external and internal metal panels 30 and 32 thanks to an attachment medium described above.

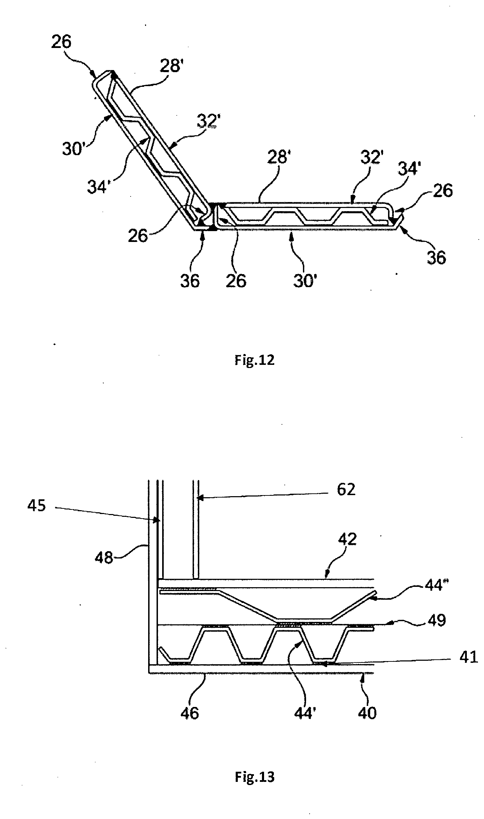

This variant is similar to the first variant shown in Figures 6 and 7, except that the two inner and outer metal panels 30 and 32 are not aligned. The folding angle of one end of the outer metal panel 30 is less than that of the first variant, being equal to or below 72°, preferably comprised from 10° to 60°. This end 36 protrudes from the inner metal panel 32 and is intended to close an open lateral face of another side wall 28, as shown in Figure 11. Figure 12 illustrates a fourth variant of the first embodiment of a side wall 28' according to the invention in which the internal metal panel 32' and the external metal panel 30' have both a folded end 26 in order to close two lateral faces of the side wall 28', and the external metal panel 30' comprises a folded end 36 in order to link two side walls 28' together.

Figure 13 illustrates a cross-sectional view of a part of a float according to a second embodiment of the invention. In this embodiment, the upper metal wall and/or the lower metal wall 46 comprise:
- an external metal panel 40,
- an internal metal panel 42 parallel to the external metal panel 40,
- at least one corrugated metal sheet (44', 44") extending within a space formed between the external metal panel 40 and the internal metal panel 42, wherein the corrugated metal sheet (44', 44") is attached to both the internal metal panel 42 and the external metal panel 40.

In other words, and according to this embodiment, the structure of the upper metal wall and/or the lower metal wall 46 is similar to the structure of the side walls of the previous embodiments.

A first metal coil sheet with a thickness equal to 8 millimeters and a wideness equal to 4 meters is bent with a 12 meters radius of curvature to form a first cylinder with a diameter of 24 meters. The outer and inner edges are chamfered, and the abutting edges are welded to form a first tube of 24 meters of diameter and 4 meters long. The first tube, corresponding to the external metal panel of the side wall 48 is then welded to a 24 meters diameter, 8 millimeters thick discoidal steel base forming the external metal panel 40 lower metal wall 46.

A first corrugated steel sheet 44' with a thickness equal to 2 millimeters, with an amplitude of 100 millimeters, a period of 120 millimeters and a contact width per period and per face of 40 millimeters, is placed on the external metal panel 40 lower metal wall 46, so as to cover the entire internal surface of the latter. The part of the corrugated metal sheet 44' directly in contact with the external metal panel 40 lower metal wall 46 can be pre-coated with a methacrylate glue 41, generally a polymethyl methacrylate-based glue, before being placed in contact with the external metal panel 40 lower metal wall 46.

A flat metal sheet 49 with a thickness equal to 0,5 millimeter is bonded to the first corrugated metal sheet 44' so as to cover the entire exposed free surface, and can be optionally welded to the edge of the external metal panel of the side wall 48. A second corrugated metal sheet 44" with identical or different dimensional characteristics (thickness, amplitude, period) to the first corrugated metal sheet 44' is bonded to the flat metal sheet 48 in such a way that the corrugated patterns of the first corrugated metal sheet 44' and of the second corrugated metal sheet 44" are not collinear and are offset by an angle ranging from 30 to 90°, preferably 90°. Alternatively, the corrugated patterns of the first corrugated metal sheet 44' and of the second corrugated metal sheet 44" could be colinear.

An 8 millimeters-thick discoidal steel sheet, forming the internal metal panel 42 of the lower metal wall 46, preferably chamfered at the top of its edge, is placed and bonded to the second corrugated metal sheet 44". The edge of this discoidal metal sheet is preferably welded to the inside of the external metal panel 40.

Finally, a third corrugated metal sheet 45, for example with a thickness equal to 2 millimeters, with an amplitude of 100 millimeters, a period of 120 millimeters, is bonded to the external metal panel of the side wall to cover the entire inner surface. The third corrugated metal sheet 45 flutes are positioned parallel to the external metal panel axis of rotation. The third corrugated metal sheet 45 is joined to the external metal panel, for example by welding or gluing the parts of the third corrugated metal sheet in contact with the external metal panel of the side wall.

A second metal coil with a thickness equal to of 8 millimeters, a wideness equal to 3,9 meters, is deployed and bent to a radius of curvature of 9.9 meters to form a second cylinder, 19,8 meters long. The latter forms the internal metal panel 62 of the side wall 48 and is placed as described in the first embodiment.

Finally, the upper metal wall is placed on the side wall and is welded to the latter. This upper metal wall could be formed by a single wall metal sheet, or by a sandwich structure as described above.

In a further embodiment, an example with a tubular side wall will be described. Of course, it is possible to manufacture an upper and/or lower metal walls with a sandwich structure with float comprising several flat side walls as described in the second embodiment.

Preferably, at least one wall of the float 2 (the upper metal wall 4, the internal metal panel 12) comprises at least one pressurizing device of the enclosure of the float 2. Pressurization of an internal volume of the float 2 allows, when combined with a pressure-measuring device, to check for any leaks that might occur as a result of welding defects or corrosion. It also makes it possible to limit the mechanical effects of swell, which tend to deform the outer face of the float 2, and therefore to potentially use thinner metal sheet. This is particularly interesting in the case of a float 2, and more particularly when the float is cylindrical in shape. The pressurization can be performed just once in order to check the float sealing, or can be maintained to obtain all the effects listed above. In such a case, at least one wall of the float 2 comprises a tapping equipped with a valve and a pressure gauge in order to pressurize the internal volume of the float 2. The float 2 can be pressurized with air, preferably dry air, at a pressure adapted to the conditions of use, typically between 0.1 and 2 bar, relative to atmospheric pressure.

Concerning the use of thinner metal sheet in order to manufacture the float 2, it is for example possible to use:
- a metal sheet having a thickness close to and from5 millimeters to 15 millimeters to form the external and/or internal metal panels,
- a metal sheet having a thickness comprised between 1 and 2 millimeters to form the corrugated metal sheet.

### List of numerical references

1: wind turbine platform
2: float
2': upper metal wall
2": lower metal wall
4: main body
6: metal connection structure
6': metal tubes
6": metal crossbeams
8: first end
10: second end
12: connection wall
12', 12": metal plates
14: through-holes
16: projections
19: transition piece
19': first part
19": second part
19‴: third part
46, 60: lower metal wall
18, 28, 28', 48, 58: side wall
20, 30, 30', 40, 50: external metal panel
22, 32, 32', 42, 52, 62: internal metal panel
24, 34, 34', 44', 44", 45, 54: corrugated metal sheet
26: end of the internal metal panel
36: end of the external metal panel
41 : glue
49: flat metal sheet
56: pre-welded stiffener

## Claims

1. Offshore wind turbine platform (1) comprising:
- a main body (4) intended to receive a mast of a wind turbine attached to it,
- several floats (2), each float comprising an upper metal wall (2') forming an upper end of the float, a lower metal wall (2") forming a lower end of the float, and several side walls (18, 28, 28', 48, 58) connecting the upper and lower metal walls to create a watertight enclosure of the float, each side wall comprising an external metal panel (20, 30, 30', 40, 50), an internal metal panel (22, 32, 32', 42, 52) parallel to the external panel at least one corrugated metal sheet (24, 34, 34', 44', 44", 54) extending in a space between the external metal panel and the internal metal panel, the corrugated metal sheet being attached to both internal metal panel and external metal panel,
- several metal connection structures (6), each metal connection structures comprising at least a first end (8) attached to one float and a second end (10) attached to the main body.

2. Offshore wind turbine platform (1) according to claim 1, wherein at least one side wall is a connection wall (12) to which a first end (8) of the metal connection structure (6) is attached, the connection wall being formed by a plurality of metal plates (12', 12") attached together and each comprising at least one through-hole (14) for the first end of the metal connection structure, the through-holes of the metal plates being aligned, at least one metal plate comprising a projection (16) extending from the through-hole perpendicularly to the metal plate from its surface.

3. Offshore wind turbine platform (1) according to claim 2, wherein the connection wall (12) is attached to other side walls (18, 28, 28', 48, 58) via a transition piece (19) intended to transfer forces between them.

4. Offshore wind turbine platform (1) according to claim 3, wherein the transition piece (19) comprises a first part (19') on which the connection wall (12) is attached, at least one second part (19") to which a side wall (18, 28, 28', 48, 58) comprising an external metal panel, an internal metal panel parallel and at least one corrugated metal sheet is attached, and a third part (19‴) linking the first and second parts together.

5. Offshore wind turbine platform (1) according to any of claims 3 or 4, wherein the transition piece (19) is a rolled piece.

6. Offshore wind turbine platform (1) according to any of the preceding claims, wherein at least one metal connection structure (6) is formed by metal tubes (6') forming the first and second ends (8, 10) of the metal connection structure and metal crossbeams (6") linking the metal tubes together.

7. Offshore wind turbine platform (1) according to any of the preceding claims, wherein at least one part of at least one metal connection structure (6) is a pressurized hollow body.

8. Offshore wind turbine platform (1) according to claim 7, wherein a pressurizing device is configured to maintain a constant overpressure in the hollow body.

9. Offshore wind turbine platform (1) according to any preceding claim, wherein at least one wall of a float (2) comprises at least one pressurizing device of an enclosure of the float.

10. Assembly of an offshore an offshore wind turbine platform (1) according to any preceding claim and of an offshore wind turbine.
